# NEUE EUROPÄISCHE PATENTSCHRIFT

(11) **EP 2 723 930 B2**
(45) Veröffentlichungstag und Bekanntmachung des Hinweises auf die Entscheidung über den Einspruch: **31.07.2019**
(45) Hinweis auf die Patenterteilung: 27.04.2016
(21) Anmeldenummer: 12734837.3
(22) Anmeldetag: 20.06.2012
(51) Int. Cl.: D06F 39/00

(54) **BEDIEN- UND ANZEIGEEINRICHTUNG FÜR EIN HAUSHALTSGERÄT UND HAUSHALTSGERÄT**
OPERATING AND DISPLAY DEVICE FOR A DOMESTIC APPLIANCE, AND DOMESTIC APPLIANCE
DISPOSITIF DE COMMANDE ET D'AFFICHAGE D'UN APPAREIL MENAGER ET APPAREIL MENAGER

(30) Priorität: 21.06.2011 DE 102011077896
(43) Veröffentlichungstag der Anmeldung: 30.04.2014
(73) Patentinhaber: BSH Hausgeräte GmbH, 81739 München (DE)
(72) Erfinder: LUBERT, Thomas, 14052 Berlin (DE); KNOPP, Lothar, 12209 Berlin (DE); LUDENIA, Thomas, 14612 Falkensee (DE); WYBRANIETZ, Gino, 14612 Falkensee (DE); BRUSS, Dietmar, 93173 Wenzenbach (DE); SCHMID, Erich, 93173 Wenzenbach (DE); VOGELSANG, Peter, 93049 Regensburg (DE)
(86) Internationale Anmeldenummer: PCT/EP2012/061759
(87) Internationale Veröffentlichungsnummer: WO 2012/175523

(56) Entgegenhaltungen:
- EP-A1- 1 894 712
- EP-A2- 1 970 479
- WO-A1-2004/107062
- WO-A1-2006/048627
- WO-A1-2008/080493
- WO-A1-2009/036233
- WO-A1-2010/094796
- WO-A2-2010/118317
- DE-A1- 10 133 135
- DE-A1-102004 038 872
- DE-A1-102005 018 298
- DE-A1-102007 013 078
- DE-A1-102007 027 838
- DE-A1-102007 053 677
- DE-A1-102007 061 522
- DE-A1-102008 014 923
- DE-A1-102008 040 882
- DE-A1-102008 041 538
- DE-A1-102009 011 678
- DE-U1- 20 119 700
- US-A- 4 204 204
- US-A1- 2010 020 028

## Beschreibung

Die Erfindung betrifft ein Haushaltsgerät mit einer Bedien- und Anzeigeeinrichtung. Die Bedien- und Anzeigeeinrichtung umfasst Bedienmittel, welche zum Einstellen zumindest eines Parameters eines Betriebsprozesses des Haushaltsgeräts dienen. Sie umfasst außerdem ein Lichtleiterteil zum Leiten von Licht, wobei eine Vielzahl von Funktionszeichen umfasst sind, die jeweils einen auswählbaren Wert des Parameters symbolisieren. Die Bedien- und Anzeigeeinrichtung umfasst auch eine Leuchteinrichtung zum Hinterleuchten der Funktionszeichen, mittels welcher das dem jeweils ausgewählten Wert des Parameters zugeordnete Funktionszeichen gegenüber anderen Funktionszeichen optisch hervorhebbar ist (siehe DE - A - 10 2009 0 11 678).

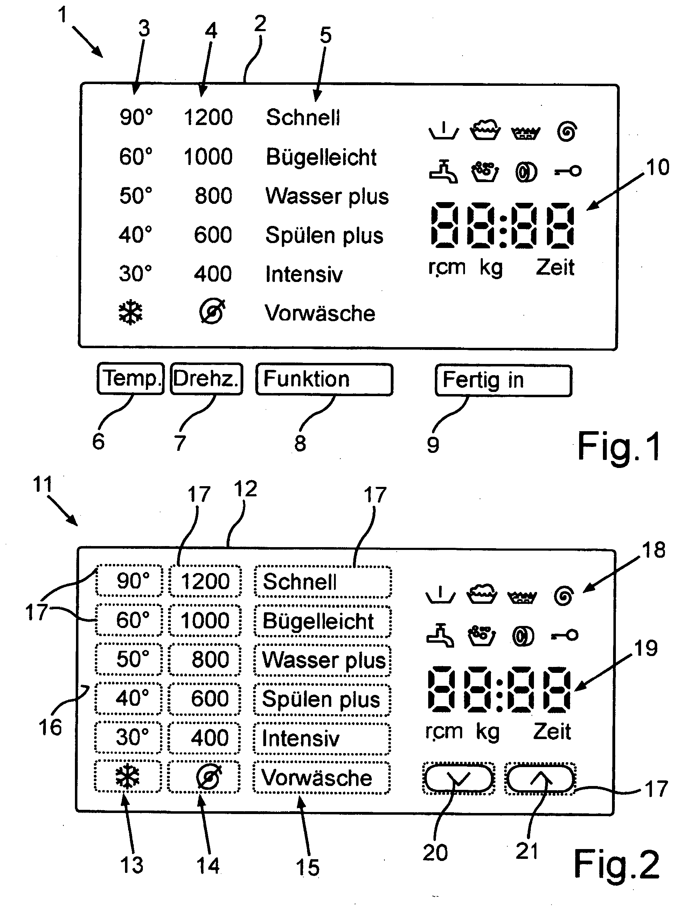

Derartige Bedien- und Anzeigeeinrichtungen sind bereits Stand der Technik. Fig. 1 zeigt diesbezüglich eine bekannte Bedien- und Anzeigeeinrichtung 1 aus dem Hause der Anmelderin. Diese Bedien- und Anzeigeeinrichtung 1 wird an einer Bedienblende einer Waschmaschine montiert. Sie umfasst ein LED-Display 2 mit einer Vielzahl von Funktionszeichen, die jeweils einen anderen Wert eines Parameters der Waschmaschine symbolisieren. Und zwar sind drei Gruppen von Funktionszeichen bereitgestellt, nämlich eine erste Spalte von Funktionszeichen 3, welche jeweils einen anderen Wert einer Betriebstemperatur darstellen, eine zweite Spalte von Funktionszeichen 4, welche jeweils einen anderen Wert einer Drehzahl der Wäschetrommel darstellen, wie auch eine dritte Spalte von Funktionszeichen 5, die jeweils eine Zusatzfunktion symbolisieren. Als Zusatzfunktionen können folgende Funktionen ausgewählt werden: "Schnell", "Bügelleicht", "Wasser plus", "Spülen plus", "Intensiv" sowie "Vorwäsche". Unterhalb des LED-Displays 2 befinden sich Bedienelemente 6, 7, 8, welche kapazitive Schalter sind. Die Bedienelemente 6, 7, 8 dienen zum Einstellen der Parameter. Und zwar kann mit dem Bedienelement 6 der Wert für die Temperatur ausgewählt werden, mit dem Bedienelement 7 der gewünschte Wert für die Drehzahl, wie auch mit dem Bedienelement 8 eine oder mehrere Zusatzfunktionen. Um die Zuordnung der Bedienelemente 6, 7, 8 zu den jeweiligen Parametern zu erleichtern, sind die Bedienelemente 6, 7, 8 direkt unterhalb der jeweiligen Spalten von Funktionszeichen 3, 4, 6 angeordnet. Die Bedienperson kann beispielsweise das Bedienelement 6 mehrmals antippen, um den gewünschten Wert für die Temperatur auszuwählen. Neben den Bedienelementen 6, 7, 8 befindet sich auch ein zusätzliches kapazitives Bedienelement 9, mittels welchem die gewünschte Zeitdauer bis zum Abschluss eines Waschprozesses eingestellt werden kann. Diese eingestellte Zeitdauer wird dann in einem Anzeigebereich 10 des LED-Displays 2 angezeigt.

Also gilt das Interesse vorliegend einem LED-Display mit einer zugeordneten Bedieneinrichtung. Bei derartigen Displays werden Leuchtelemente - LEDs - eingesetzt, mittels welchen die Anzeigesymbole bzw. Funktionszeichen hinterleuchtet werden können. Eine derartige Bedien- und Anzeigeeinrichtung ist auch beispielsweise aus dem Dokument DE 102 36 718 A1 bekannt. Diese Bedien- und Anzeigeeinrichtung beinhaltet eine Bedienblende, welche ein einstückiges Kunststoff-Spritzgussbauteil ist, welches aus ABS-Kunststoff hergestellt ist. Die Bedienblende weist einen kreisförmigen Durchleuchtungsbereich auf, in welchem die Materialstärke des Blendenmaterials gegenüber der Norm-Materialstärke derart reduziert ist, dass der Durchleuchtungsbereich lichtdurchlässig ist. Dieser Durchleuchtungsbereich bildet eine optische Anzeigeeinrichtung - auf der Oberfläche des Durchleuchtungsbereichs sind Anzeigesymbole bzw. Funktionssymbole angebracht, welche mittels eines Leuchtelements - etwa einer Leuchtdiode - beleuchtet werden können. Das Leuchtelement ist auf einer Leiterplatte angebracht. Des Weiteren ist an einer Rückseite der Bedienblende eine Sensorelektrode angebracht, welche Bestandteil eines kapazitiven Schalters bzw. Bestandteil eines Berührungskondensators ist. Die Sensorelektrode ist über ein Koppelelement bzw. Kontaktteil mit der Leiterplatte und somit mit einer Auswerteeinheit elektrisch verbunden. Das Koppelelement kann elastisch ausgebildet sein, etwa als metallische Schrauben- oder Blattfeder oder als zusammenstauchbares Element aus leitfähigem, elastischem Kunststoff. Die Leiterplatte befindet sich also in einem Abstand zu der Bedienblende. Die Sensorelektrode umschließt den Durchleuchtungsbereich, jedoch sind die Funktions- und Anzeigesymbole nicht in Überdeckung mit der Sensorelektrode. Als nachteilig an diesem Stand der Technik ist der Umstand anzusehen, dass das Koppelelement ein gewisses Übersprechen zwischen der Sensorelektrode und gegebenenfalls vorhandenen anderen Sensorelektroden bzw. anderen kapazitiven Schaltern verursacht. Die Betätigung eines der kapazitiven Schalter kann somit ein ungewolltes Auslösen einer einem anderen kapazitiven Schalter zugeordneten Funktion verursachen.

Aus der Druckschrift DE 28 24 973 A1 ist eine Bedien- und Anzeigeinrichtung für ein Haushaltsgerät bekannt. Auf einer Leiterplatte, welche über ein Bandkabel mit den übrigen Steuerelementen des Haushaltsgeräts verbunden ist, ist ein zweizeiliges, mit Schriften und Symbolen versehenes Display aufgesetzt. Das Display ist durch eine Bedienplatte bzw. Steuerplatte abgedeckt, die mit transparenten, metallischen Flächen versehen ist. Diese metallischen Flächen bilden mit darunter liegenden Flächen ein kapazitives Schaltelement, das die Befehlsansteuerung bewirkt. Das Display ist beispielsweise mit Leuchtelementen in LED- oder LCD-Technik bestückt.

Aus dem Dokument US 2007/0242055 A1 ist ein berührungsempfindliches OLED-Display (OLED steht für Organische Leuchtdiode) bekannt. Dieses Display beinhaltet ein Substrat bzw. eine Platine, eine OLED-Einrichtung, wie auch eine kapazitive Bedieneinrichtung sowie eine Dichtung. Die kapazitive Bedieneinrichtung umfasst eine erste transparente und leitfähige Schicht, eine isolierende Schicht sowie eine zweite transparente und leitfähige Schicht, welche an der Rückseite einer Abdeckung bzw. Blende angebracht sind. Die Platine ist in einem Abstand zu der Blende angeordnet. Auf der Platine ist die OLED-Einrichtung angeordnet, welche ebenfalls aus drei verschiedenen Schichten bestehen kann. Ein Zwischenraum zwischen der Blende und der Platine wird mittels der Dichtung abgedichtet.

Eine Bedien- und Anzeigeeinrichtung für eine Waschmaschine ist außerdem aus der Druckschrift GB 2 262 820 A bekannt.

Eine weitere Bedien- und Anzeigeeinrichtung mit einer Bedienblende für ein Haushaltsgerät ist aus DE 10 2006 013 937 A1 bekannt. Diese Einrichtung verfügt über eine Schaltungsanordnung, die mit an der Außenseite der Bedienblende angeordneten Betätigungs- und Anzeigeabschnitten gekoppelt sind und die im Bereich der Innenseite der Bedienblende angeordnet ist. Die Schaltungsanordnung umfasst mindestens drei Elektroden, die etwa parallel zur Bedienblende angeordnet sind, wobei die räumliche Lage eines Betätigungsabschnittes in Bezug auf die Lage der Elektroden mittels eines Auswertemittels bestimmt wird. Hierdurch sind die Positionen der Betätigungsabschnitte im Bereich der Außenseite der Bedienblende frei definierbar. Eine solche Bedien- und Anzeigeeinrichtung benötigt somit aufwendige Auswertemittel, um die Lage der Betätigung zu ermitteln und einem Abschnitt zu zuordnen, damit dieser Abschnitt als ein Bedienmittel für die Einstellung eines Parameters wirken kann. Ferner muss eine solche Einrichtung über Kalibriereinrichtungen verfügen, damit die Lage der Betätigung korrekt ermittelt werden kann, um eine fehlerhafte Zuweisung des Betätigungsabschnitts zu vermeiden.

Es ist Aufgabe der Erfindung, einen Weg aufzuzeigen, wie bei einer Bedien- und Anzeigeeinrichtung der eingangs genannten Gattung die Bedienung bzw. die Einstellung des Parameters im Vergleich zum Stand der Technik erleichtert und mit einfachen Mitteln bereitgestellt werden kann.

Diese Aufgabe wird erfindungsgemäß durch ein Haushaltsgerät mit den Merkmalen gemäß Patentanspruch 1 gelöst. Vorteilhafte Ausführungen der Erfindung sind Gegenstand der abhängigen Patentansprüche.

Eine Bedien- und Anzeigeeinrichtung für ein erfindungsgemäßes Haushaltsgerät beinhaltet Bedienmittel zum Einstellen zumindest eines Parameters eines Betriebsprozesses des Haushaltsgeräts. Ein Lichtleiterteil dient zum Leiten von Licht. Ferner umfasst die Einrichtung Funktionszeichen die jeweils einen auswählbaren Wert des Parameters symbolisieren bzw. darstellen und die Bedienmittel optisch kennzeichnen. Die Funktionszeichen können mit einer Leuchteinrichtung hinterleuchtet werden, mittels welcher das dem jeweils ausgewählten Wert des Parameters zugeordnete Funktionszeichen gegenüber anderen Funktionszeichen optisch hervorgehoben werden kann. Die Bedienmittel sind als berührungssensitive Bedienmittel ausgebildet und weisen eine berührungssensitive Betätigungsfläche auf, die in Überlappung mit den Funktionszeichen derart angeordnet ist, dass durch Berühren der Betätigungsfläche in einem Überlappungsbereich mit einem der Funktionszeichen der diesem Funktionszeichen zugeordnete Wert des Parameters ausgewählt wird.

Erfindungsgemäß wird also ein berührungsempfindliches Display geschaffen, bei welchem die Anzeigesymbole bzw. Funktionszeichen direkt angetippt werden können, um den Parameter des Betriebsprozesses des Haushaltsgeräts einzustellen. Die Bedienperson kann somit die Funktionszeichen quasi direkt berühren, um den gewünschten Parameterwert auszuwählen. Dies erleichtert einerseits die Bedienung des Haushaltsgeräts bzw. die Einstellung des Parameters im Vergleich zum Stand der Technik gemäß Fig. 1, denn kein Bedienelement braucht mehrmals betätigt zu werden. Auf der anderen Seite kann das Display selbst im Vergleich zum Stand der Technik vergrößert werden, denn es erübrigen sich die Bedienelemente neben dem Display. Außerdem ermöglicht die Erfindung eine intuitive und benutzerfreundliche Bedienung des Haushaltsgeräts. Die Bedienperson kann nämlich die berührungssensitive Betätigungsfläche direkt an der Stelle des ausgewählten Funktionszeichens berühren bzw. antippen, und der diesem Funktionszeichen zugeordnete Parameterwert wird sofort ausgewählt.

Die Bedien- und Anzeigeeinrichtung des erfindungsgemäßen Haushaltsgeräts stellt somit ein berührungsempfindliches Display, insbesondere ein LED-Display, dar, bei welchem der Wert des Parameters durch Antippen eines der Funktionszeichen ausgewählt und die Auswahl dieses Funktionszeichens durch Hinterleuchten dieses Zeichens signalisiert werden können. Das Bedienen der Bedieneinrichtung erfolgt somit durch Berühren der Betätigungsfläche, ohne dass eine mechanische Bewegung eines Bedienknopfes durchgeführt werden muss. Dies bedeutet insbesondere, dass Bedienblenden, bei denen solche Bedieneinrichtungen eingesetzt werden, ohne Durchbruch mit einer geschlossenen Oberfläche ausgebildet sein können, was insbesondere bei Haushaltsgeräten den Vorteil hat, dass keine Verunreinigungen in das Geräteinnere eintreten können und außerdem die geschlossene Oberfläche besonders leicht gereinigt werden kann.

Unter einem Haushaltsgerät wird vorliegend ein Gerät verstanden, welches zur Haushaltsführung eingesetzt wird. Das Haushaltsgerät ist also ein Gerät, welches zur Behandlung von Haushaltsgegenständen ausgebildet ist, etwa von Wäschestücken und/oder Geschirr und/oder Lebensmitteln und dergleichen. Es kann ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühl-Gefrier-Kombination oder ein Klimagerät. Es kann aber auch ein Haushaltskleingerät sein, wie beispielsweise ein Kaffeevollautomat oder aber eine Küchenmaschine.

Es erweist sich als besonders vorteilhaft, wenn die Bedienmittel zum Einstellen des Parameters als kapazitive Bedienmittel ausgebildet sind. Sie können eine Vielzahl von kapazitiven Sensorelektroden bzw. elektrisch leitfähigen Sensorflächen aufweisen, die in einem Abstand zu und in Überlappung mit der berührungssensitiven Betätigungsfläche angeordnet sind. Das Antippen der Funktionszeichen wird somit auf kapazitivem Wege detektiert. Wird die Betätigungsfläche durch die Bedienperson berührt, so ändert sich die Kapazität eines Berührungskondensators, welcher einerseits durch eine der Sensorelektroden und andererseits durch den Finger der Bedienperson gebildet ist. Diese Änderung der Kapazität kann dann durch eine Auswerteeinheit bzw. Auswerteelektronik erkannt und als Betätigung interpretiert werden. Solche kapazitiven Schalter haben den Vorteil, dass die Berührung der Betätigungsfläche besonders zuverlässig und schnell detektiert werden kann, ohne dass die Bedienblende mit einem Durchbruch ausgebildet werden muss.

Hinsichtlicht der Betätigung der Betätigungsfläche ist erfindungsgemäß vorgesehen, dass zumindest einem Teil der Funktionszeichen - gegebenenfalls auch allen Funktionszeichen - jeweils eine separate kapazitive Sensorelektrode zugeordnet sein kann, welche in Überlappung mit dem ihr zugeordneten Funktionszeichen angeordnet ist. Durch Berühren der Betätigungsfläche in einem Überlappungsbereich mit einer der Sensorelektroden wird somit die Kapazität des diese Sensorelektrode aufweisenden Berührungskondensators verändert. Jedes Funktionszeichen kann somit separat bzw. unabhängig von anderen Funktionszeichen angetippt werden, und der gewünschte Wert des Parameters kann durch einfaches Berühren der Betätigungsfläche im Überlappungsbereich mit dem jeweiligen Funktionszeichen bzw. der zugeordneten Sensorelektrode ausgewählt werden.

Ergänzend kann auch eine zweite Ausführungsform umfasst sein, gemäß der auch ein kapazitiver Schiebeschalter bzw. "Slider" bereitgestellt werden kann: Zumindest zwei benachbarte Funktionszeichen können in Überdeckung mit einer gemeinsamen kapazitiven Sensorelektrode angeordnet sein. Der gewünschte Wert des Parameters kann dann durch Gleiten über die Betätigungsfläche in einem Überlappungsbereich mit den zumindest zwei Funktionszeichen und der gemeinsamen Sensorelektrode ausgewählt werden. Bei dieser Ausführungsform kann die Bedienperson ihren Finger an der berührungssensitiven Betätigungsfläche verschieben und in die gewünschte Endposition über dem gewünschten Funktionszeichen bringen. Wird der Finger beispielsweise von einem ersten der Funktionszeichen hin zu einem zweiten Funktionszeichen bewegt, so wird die Hervorhebung des ersten Funktionszeichens aufgehoben und des zweiten Funktionszeichens aktiviert. Hier ist auch ein einfaches Antippen eines der Funktionszeichen möglich, ohne dass eine Gleitbewegung mit dem Finger durchgeführt werden muss.

Vorzugsweise sind an dem Lichtleiterteil die Funktionszeichen angebracht, welche mittels der Leuchteinrichtung hinterleuchtet werden können, nämlich insbesondere über das Lichtleiterteil. Die Funktionszeichen symbolisieren jeweils einen anderen Wert des Parameters des Betriebsprozesses des Haushaltsgeräts. Neben einer Zahl bzw. einer Ziffer - etwa Temperaturwert oder Drehzahlwert - können unter einem Wert des Parameters vorliegend auch Bezeichnungen bzw. Buchstabenfolgen verstanden werden, nämlich beispielsweise verschiedene Betriebsprogramme des Haushaltsgeräts und/oder verschiedene Zusatzfunktionen. Ein Parameter kann beispielsweise auch ein Betriebsprogramm des Haushaltsgeräts sein - als Parameterwert wird hier die Bezeichnung des konkreten Betriebsprogramms verstanden. Gleichfalls kann als Parameter auch eine Zusatzfunktion des Haushaltsgeräts eingestellt werden, bei einer Waschmaschine etwa "Bügelleicht" oder "Vorwäsche". Die Funktionszeichen können im Allgemeinen Wortzeichen und/oder Zahlen und/oder Bildzeichen bzw. Bildsymbole und/oder Kombinationszeichen umfassen, wie beispielsweise Wort-Bild-Zeichen.

Also können die Bedienmittel zum Einstellen zumindest eines der folgenden Parameter des Betriebsprozesses des Haushaltsgeräts ausgebildet sein: Sie können zum Einstellen einer Betriebstemperatur als Parameter ausgebildet sein - zumindest ein Teil der Funktionszeichen kann jeweils einen auswählbaren Wert der Betriebstemperatur symbolisieren bzw. darstellen. Diese Ausführungsform erweist sich insbesondere bei einem Haushaltsgerät zur Pflege von Wäschestücken - etwa einer Waschmaschine - oder aber bei einer Geschirrspülmaschine oder bei einem Haushaltsgerät zur Zubereitung von Lebensmitteln - etwa einem Backofen und/oder einem Kochfeld - als besonders vorteilhaft. Die Bedienperson kann den gewünschten Temperaturwert an der berührungssensitiven Betätigungsfläche antippen, um diesen Temperaturwert einzustellen.

Ergänzend oder alternativ können die Bedienmittel auch zum Einstellen einer Bewegungsgeschwindigkeit, insbesondere einer Drehzahl, einer Komponente des Haushaltsgeräts als Parameter ausgebildet sein. Hier kann zumindest ein Teil der Funktionszeichen jeweils einen auswählbaren Wert der Bewegungsgeschwindigkeit (Drehzahl) symbolisieren bzw. darstellen. Diese Ausführungsform ist besonders sinnvoll bei solchen Haushaltsgeräten, welche über eine bewegliche Komponente verfügen, wie etwa eine Wäschetrommel oder dergleichen.

Ergänzend oder alternativ können die Bedienmittel zum Festlegen eines Betriebsprogramms für den Betriebsprozess als Parameter ausgebildet sein, und zumindest ein Teil der Funktionszeichen kann jeweils ein verschiedenes Betriebsprogramm bzw. jeweils eine verschiedene Bezeichnung eines konkreten Betriebsprogramms symbolisieren. Dies gilt entsprechend für Zusatzfunktionen des Haushaltsgeräts. So kann jedes der Funktionszeichen eine andere Zusatzfunktion des Haushaltsgerätes kennzeichnen.

An dem Lichtleiterteil kann eine dünne Folie mit den Funktionszeichen angebracht sein. Dies kann eine Schriftfolie bzw. eine Lichtmaske sein. Somit können die Funktionszeichen und die Betätigungsfläche auf verschiedenste Art und Weise ausgestaltet werden, und zwar unabhängig von der Ausgestaltung des Lichtleiterteils. Für unterschiedliche Ländervarianten brauchen somit lediglich jeweils unterschiedliche Schriftfolien eingesetzt zu werden, während die anderen Komponenten beibehalten werden können.

Hinsichtlich der mechanischen Ausgestaltung der Bedien- und Anzeigeeinrichtung können im Allgemeinen unterschiedlichste Ausführungsformen vorgesehen sein. So kann in einer Ausführungsform die Oberfläche des Lichtleiterteils bzw. die daran angebrachte Schriftfolie die berührungssensitive Betätigungsfläche bilden. Bei dieser Ausführungsform können die genannten kapazitiven Sensorelektroden an einer Rückseite des Lichtleiterteils angeordnet sein.

An dem Lichtleiterteil ist ein plattenartiges, zumindest bereichsweise, insbesondere vollständig, aus einem lichtdurchlässigen Material ausgebildetes Anzeigefenster bzw. Displayscheibe angebracht. Dieses Anzeigefenster ist aus transparentem Kunststoff bereitgestellt. Die Oberfläche des Anzeigefensters kann gleichzeitig die berührungssensitive Betätigungsfläche bilden. Dieses Anzeigefenster ist in eine Durchgangsöffnung einer Bedienblende des Haushaltsgeräts eingesetzt ; es ist in die Bedienblende geschweißt. Der Einsatz eines separaten Anzeigefensters, dessen Oberfläche gleichzeitig die berührungssensitive Betätigungsfläche bildet, hat den Vorteil, dass zum einen die Folie mit den Funktionszeichen vor äußeren Einflüssen geschützt werden kann und zum anderen auch die äußere Oberfläche der Bedien- und Anzeigeeinrichtung optisch ansprechend auf unterschiedlichste Art und Weise gestaltet werden kann, und zwar unabhängig von dem Lichtleiterteil und der daran angebrachten Folie mit den Funktionszeichen. So können beispielsweise unterschiedliche Gerätevarianten mit jeweils unterschiedlichen Anzeigefenstern bereitgestellt werden, zum Beispiel mit jeweils einer anderen Farbtönung.

An einer von der Betätigungsfläche abgewandten Rückseite des Anzeigefensters - mit Ausnahme der Überlappungsbereiche mit den Funktionszeichen oder auch im Überlappungsbereich mit den Funktionszeichen - kann ein zumindest teilweise lichtundurchlässiger Sperrdruck, insbesondere ein Siebdruck, aufgebracht sein. Unter dem Sperrdruck wird eine Schicht verstanden, die dazu ausgebildet ist, einen Lichtdurchtritt zu vermindern oder vollständig verhindern, wobei die Wirkung sich auf bestimmte Lichtwellenlängen, beispielsweise nur Licht einer bestimmten Farbe, oder auf nur eine Lichtdurchtrittsrichtung beschränken kann. Somit können beispielsweise Leiterbahnen verdeckt werden, die hinter dem Anzeigefenster angeordnet sind, etwa auf einer flexiblen Folie. Wenn ein den Lichtdurchtritt vermindernder Sperrdruck auch im Überlappungsbereich mit den Funktionszeichen vorgesehen ist, können auch nicht beleuchtete Funktionszeichen von der Oberfläche (Betätigungsseite) des Anzeigefensters unkenntlich sein, d.h. bei einem bestimmungsgemäßen Einsatz des Anzeigefensters der Bedieneinrichtung mit einem solchen Sperrdruck ist ein Funktionszeichen von einer Bedienperson nur dann an der ihm zugewandten Oberfläche des Anzeigefensters erkennbar, wenn die dem Funktionszeichen zugeordnete Hinterleuchtung aktiviert ist.

Das Anzeigefenster kann aus einem farblich getönten Material ausgebildet sein. Auf diesem Wege wird erreicht, dass der an der Rückseite des Anzeigefensters angebrachte Sperrdruck auf der Bedienseite der Bedien- und Anzeigeeinrichtung nicht erkennbar ist.

An dem Lichtleiterteil oder an dem Anzeigefenster, insbesondere zwischen dem Lichtleiterteil und dem Anzeigefenster, kann eine transparente Folie mit den Sensorelektroden - und gegebenenfalls mit Leiterbahnen - angeordnet sein. Die Sensorelektroden und die Leiterbahnen können beispielsweise durch eine Heißprägung oder aber einen anderen Fertigungsprozess individuell auf die transparente Folie aufgebracht werden. Die Leiterbahnen können über Kontaktflächen (Kontaktpads) - beispielsweise aus Kohlenstoff - mit der Elektronik des Haushaltsgeräts gekoppelt werden. Die Kontaktierung mit der Elektronik kann über Federelemente aus leitfähigem Material erfolgen, die sich beispielsweise in Kunststoffhalterungen (Retainer) befinden. Also kann die transparente Folie mit den kapazitiven Sensorelektroden zwischen dem Anzeigefenster und dem Lichtleiterteil angeordnet sein. Eine derartige Anordnung der Sensorelektroden hat den Vorteil, dass der Abstand zwischen der berührungssensitiven Betätigungsfläche (Oberfläche des Anzeigefensters) einerseits und den Sensorelektroden andererseits besonders gering und die Empfindlichkeit der Bedieneinrichtung somit besonders hoch ist.

Die Folie kann auch eine mehrlagige Folie sein. Wird eine solche mehrlagige Folie zwischen dem Anzeigefenster und dem Lichtleiterteil eingesetzt, so erübrigt sich gegebenenfalls der Sperrdruck an der Rückseite des Anzeigefensters.

Alternativ zur mehrlagigen Folie kann eine Dekorfolie auf der Vorderseite eines transparenten Kunststoffdisplays gespritzt und auf der Rückseite des transparenten Kunststoffdisplays die Leiterbahnfolie anbringen werden. Die Leiterbahnfolie kann durch Kleben oder mit einer so genannten IML- oder IMD -Technik mit dem Kunststoffdisplay verbunden werden. IML steht für In-Mold-Labeling, was auch als ein Spitzgussverfahren verstanden wird. IMD steht für In-Mold-Decoration und bezeichnet ein Spritz- bzw. Heißprägeverfahren.

Alternativ zu der transparenten Folie kann an einer von der Betätigungsfläche abgewandten Rückseite des Lichtleiterteils eine Leiterplatte angeordnet sein, an welcher die kapazitiven Sensorelektroden angebracht sind. Dies kann so aussehen, dass die Sensorelektroden mit der Rückseite des Lichtleiterteils in Anlage gebracht sind. Eine solche Lösung ist besonders kostengünstig, denn es erübrigt sich der Einsatz einer transparenten Folie mit transparenten Sensorelektroden. Auf der anderen Seite sorgt die Anordnung der Sensorelektroden direkt an der Rückseite des Lichtleiterteils dafür, dass keine Luftspalte zwischen der Betätigungsfläche einerseits und den Sensorelektroden andererseits ausgebildet sind, was die Empfindlichkeit der kapazitiven Bedieneinrichtung verschlechtern könnte.

Die Leuchteinrichtung kann eine Vielzahl von Leuchtelementen - etwa LEDs - umfassen, welche zum Hinterleuchten der Funktionszeichen dienen. Die Leuchtelemente können an einer von dem Lichtleiterteil abgewandten Rückseite der Leiterplatte angeordnet sein. Dann sind folgende Ausführungsformen vorgesehen: Zum einen können in der Leiterplatte Durchgangsöffnungen ausgebildet sein, durch welche das Licht der Leuchtelemente leitbar ist. Zum anderen kann die Leiterplatte selbst zumindest bereichsweise transparent oder transluzent ausgebildet sein, sodass das Licht der Leuchtelemente über den transparenten Bereich geleitet wird. Einerseits verbleibt somit auf der anderen Seite der Leiterplatte mehr Platz für die Sensorelektroden und gegebenenfalls auch für Leiterbahnen. Andererseits wird somit der Vorteil erzielt, dass zwischen der Leiterplatte einerseits und dem Lichtleiterteil andererseits kein Luftspalt gebildet wird bzw. die Leiterplatte mit der Rückseite des Lichtleiterteils flächendeckend in Anlage gebracht werden kann. Es wird somit ein Luftspalt zwischen dem Lichtleiterteil und den Sensorelektroden verhindert, wie auch die Verringerung der Empfindlichkeit der kapazitiven Bedieneinrichtung.

Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung eine Bedien- und Anzeigeeinrichtung gemäß dem Stand der Technik;
- Fig. 2: eine Bedien- und Anzeigeeinrichtung gemäß einer ersten Ausführungsform der Erfindung;
- Fig. 3: eine Bedien- und Anzeigeeinrichtung gemäß einer zweiten Ausführungsform der Erfindung;
- Fig. 4: in schematischer Darstellung eine mögliche Ausführung der Bedien- und Anzeigeeinrichtungen gemäß den Fig. 2 und 3; und
- Fig. 5: in schematischer Darstellung eine alternative Ausführung der Bedien- und Anzeigeeinrichtungen.

In Fig. 2 ist in schematischer Darstellung eine Bedien- und Anzeigeeinrichtung 11 einer Waschmaschine gemäß einer Ausführungsform der Erfindung dargestellt. Die Bedien- und Anzeigeeinrichtung 11 beinhaltet ein berührungsempfindliches LED-Display 12, welches eine Vielzahl von Funktionszeichen aufweist, die hinterleuchtet werden können. Es sind - ähnlich wie in Fig. 1 - drei Spalten von Funktionszeichen bereitgestellt, nämlich eine erste Spalte von Funktionszeichen 13, eine zweite Spalte von Funktionszeichen 14 sowie ein dritte Spalte von Funktionszeichen 15. Die erste Spalte von Funktionszeichen 13 symbolisieren jeweils einen anderen Wert für eine Betriebstemperatur der Waschmaschine. Die Funktionszeichen 13 stellen also Parameterwerte für den Parameter "Betriebstemperatur" dar. Die zweite Spalte von Funktionszeichen 14 symbolisieren jeweils einen anderen Wert für eine Drehzahl der Wäschetrommel für einen Schleuderbetrieb der Waschmaschine. Die Funktionszeichen 14 stellen also Parameterwerte für den Parameter "Drehzahl" dar. Die dritte Spalte von Funktionszeichen 15 beinhaltet eine Vielzahl von unterschiedlichen Bezeichnungen für Zusatzfunktionen der Waschmaschine. Dies sind: "Schnell", "Bügelleicht", "Wasser plus", "Spülen plus", "Intensiv" und "Vorwäsche".

Das berührungssensitive LED-Display 12 hat eine berührungssensitive Betätigungsfläche 16, welche durch die Bedienperson berührt werden kann, um die genannten Parameter einzustellen. Hinter der Betätigungsfläche 16 sind eine Vielzahl von kapazitiven Sensorelektroden angeordnet, und zwar im Ausführungsbeispiel gemäß Fig. 2 jeweils eine separate Sensorelektrode für jedes Funktionszeichen. Es sind somit zwischen den Sensorelektroden einerseits und den zugeordneten Funktionszeichen andererseits Überlappungsbereiche 17 vorhanden, welche in Fig. 2 mit gestrichelten Linien angedeutet sind, jedoch durch die Bedienperson nicht sichtbar sind. Die Betätigungsfläche 16 kann durch die Bedienperson angetippt werden, und zwar in den jeweiligen Überlappungsbereichen 17. Somit kann ein Funktionszeichen 13, 14, 15 angetippt werden, um den gewünschten Parameterwert auszuwählen.

Das berührungssensitive LED-Display 12 stellt Bedienmittel im Sinne der vorliegenden Erfindung dar, welche zur Einstellung der genannten Parameter dienen.

Auf der rechten Seite des rechteckförmigen LED-Displays 12 sind auch weitere Symbole 18 vorhanden, welche unterschiedliche Phasen eines Waschprozesses symbolisieren. Diese Symbole 18 können mittels einzelner LEDs hinterleuchtet werden.

Unterhalb der Symbole 18 befindet sich ein Anzeigebereich 19 mit vier Sieben-SegmentAnzeigen, die zur Anzeige einer Zeitdauer bis zum Abschluss eines Waschprozesses dienen. Diese Zeitdauer kann auch durch Berühren der berührungssensitiven Betätigungsfläche 16 eingestellt werden, und zwar in Überlappungsbereichen 17 mit zwei Symbolen 20, 21. Durch Antippen des Symbols 20 kann diese Zeitdauer verringert werden; durch Antippen des Symbols 21 kann sie erhöht werden.

Wird einer der Parameterwerte ausgewählt bzw. eines der Funktionszeichen 13, 14, 15 angetippt, so wird das ausgewählte Funktionszeichen optisch hervorgehoben, nämlich gegenüber anderen, nicht ausgewählten Funktionszeichen. Dies erfolgt mithilfe einer Leuchteinrichtung mit einer Vielzahl von LEDs, welche hinter der Betätigungsfläche 16 angeordnet sind.

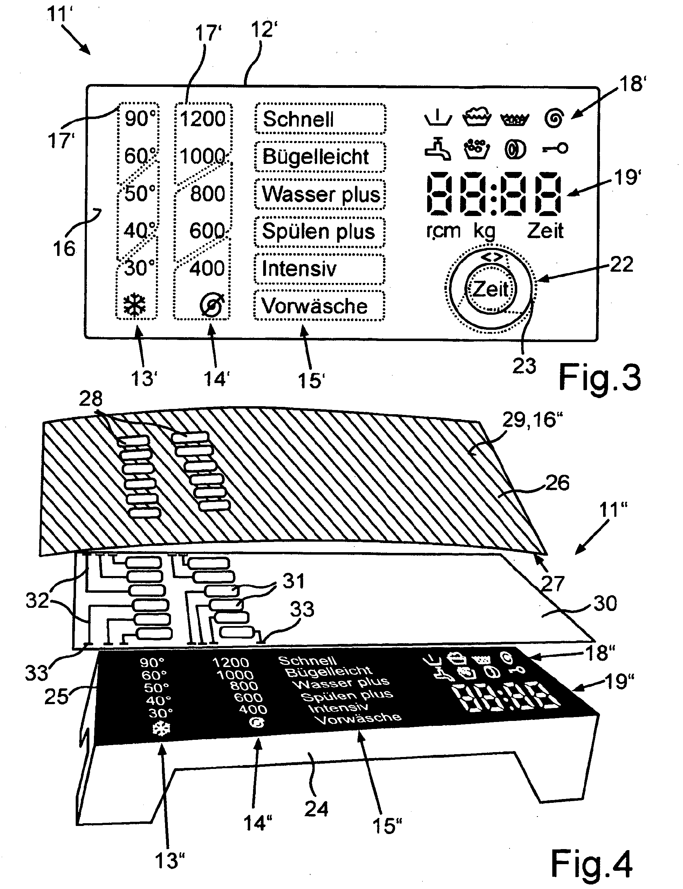

In Fig. 3 ist eine Bedien- und Anzeigeeinrichtung 11' einer Waschmaschine gemäß einer zweiten Ausführungsform der Erfindung dargestellt. Diese Bedien- und Anzeigeeinrichtung 11' gemäß Fig. 3 entspricht im Wesentlichen der gemäß Fig. 2, sodass nachfolgend lediglich die Unterschiede dazwischen näher erläutert werden: Während bei der Bedien- und Anzeigeeinrichtung 11 gemäß Fig. 2 jedem Funktionszeichen 13, 14, 15 eine separate Sensorelektrode zugeordnet ist und somit jeweils separate Überlappungsbereiche 17 vorhanden sind, sind die Funktionszeichen 13', 14' bei der Bedien- und Anzeigeeinrichtung 11' gemäß Fig. 3 in Paaren gruppiert, sodass zwei benachbarte Funktionszeichen 13', 14' derselben Spalte in Überdeckung mit einer gemeinsamen Sensorelektrode angeordnet sind. Dies ist anhand der gestrichelten Linien angedeutet. Hierdurch können die jeweiligen Parameterwerte auch durch Gleiten mit einem Finger über die Betätigungsfläche 16' ausgewählt werden, wobei ein einfaches Antippen der Funktionszeichen 13', 14' ebenfalls möglich ist. Auch die Zeitdauer bis zum Abschluss des Waschprozesses wird auf eine andere Art und Weise eingestellt, nämlich mithilfe eines zirkularen kapazitiven Gleitschalters 22. Dieser Gleitschalter 22 beinhaltet Sensorelektroden in Form von Kreisringsegmenten, welche hinter der Betätigungsfläche 16 angeordnet sind. Auf dem LED-Display 12' ist ein Symbol 23 vorhanden, welches die Form eines Kreisrings aufweist. Durch Gleiten mit dem Finger entlang des Symbols 23 im Uhrzeigersinn kann die genannte Zeitdauer erhöht werden; durch Gleiten gegen den Uhrzeigersinn wird diese Zeitdauer verringert.

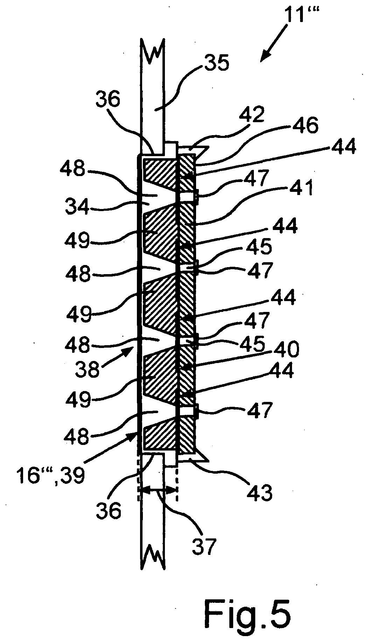

In den Fig. 4 und 5 sind zwei unterschiedliche mögliche Ausführungen der Bedien- und Anzeigeeinrichtung dargestellt.

Die in Fig. 4 dargestellte kapazitive Bedien- und Anzeigeeinrichtung 11" beinhaltet ein Lichtleiterteil 24, welches zum Leiten von Licht dient. An einer Stirnseite des Lichtleiterteils 24 ist eine Folie 25 angebracht, welche eine Schriftfolie bzw. eine Lichtmaske ist. Auf der Folie 25 sind die Funktionszeichen 13", 14", 15" bereitgestellt, wie auch die weiteren Symbole 18" sowie der Anzeigebereich 19". Das Lichtleiterteil 24 ist beispielsweise aus transparentem Kunststoff ausgebildet und ist somit lichtdurchlässig. Die Folie 25 ist hingegen - mit Ausnahme der Funktionszeichen 13", 14", 15" und der Symbole 18" sowie des Anzeigebereichs 19" - lichtundurchlässig. Somit können die Funktionszeichen 13", 14", 15" von der Rückseite des Lichtleiterteils 24 hinterleuchtet werden.

Die Bedien- und Anzeigeeinrichtung 11" beinhaltet außerdem ein Anzeigefenster 26, welches ein plattenartiges, eigensteifes Element ist. Das Anzeigefenster 26 kann vollständig aus einem transparenten Material - etwa aus transparentem Kunststoff - ausgebildet sein. An einer Rückseite 27 ist dieses Anzeigefenster 26 mit einem Sperrdruck - insbesondere mit Siebdruck - versehen. Nicht bedruckt werden Flächen 28, welche direkt über den Funktionszeichen 13", 14", 15" bzw. in Überdeckung mit diesen Funktionszeichen liegen. Der Übersicht halber sind in Fig. 4 lediglich zwei Spalten von nicht bedruckten Flächen 28 dargestellt; selbstverständlich können solche Flächen auch im Bereich der Symbole 18" und des Anzeigebereichs 19" vorhanden sein. Die nicht bedruckten Flächen 28 sorgen dafür, das die Funktionszeichen 13", 14", 15" von außen sichtbar sind. Eine äußere Oberfläche 29 des Anzeigefensters 26 bildet gleichzeitig die berührungssensitive Betätigungsfläche 16" der Bedien- und Anzeigeeinrichtung 11".

In einer nicht weiter dargestellten Ausführung der Bedien- und Anzeigeeinrichtung 11" sind zusätzlich auch die Flächen 28, welche direkt über den Funktionszeichen 13", 14", 15" bzw. in Überdeckung mit diesen Funktionszeichen oder über den Symbolen 18" liegen, an der Rückseite 27 des Anzeigefensters 26 mit einem Sperrdruck versehen, der den Lichtdurchtritt vermindert. Hierdurch ist ein Funktionszeichen 13", 14", 15" oder ein Symbol 18" von einer Bedienperson nur dann an der ihm zugewandten Oberfläche 29 des Anzeigefensters 26 erkennbar, wenn die dem Funktionszeichen 13", 14", 15" oder dem Symbol 18" zugeordnete Hinterleuchtung aktiviert ist.

Damit der Sperrdruck von außen nicht sichtbar ist, kann das Anzeigefenster 26 farblich getönt ausgeführt werden. Das Anzeigefenster 26 kann in eine Bedienblende der Waschmaschine geschweißt werden.

Mit der Rückseite 27 des Anzeigefensters 26 wird eine transparente Folie 30 stoffschlüssig verbunden. Diese Folie 30 ist eine flexible, ein- oder mehrlagig ausgeführte, vollständig oder teilweise lichtdurchlässige Leiterbildfolie aus Kunststoff, welche mit dem Anzeigefenster 26 in einem Spritzgieß- oder Spritzprägeprozess (IML/IMD) bzw. durch Kleben verbunden wird. Auf der Folie 30 sind - ebenfalls transparente - Sensorelektroden 31 angeordnet, welche über jeweilige Leiterbahnen 32 mit Kontaktflächen 33 elektrisch verbunden sind. Das Leiterbahnlayout kann zuvor durch einen Heißprägeprozess oder einen anderen Prozess individuell auf die Folie 30 aufgebracht werden. Die Kontaktflächen 33 können aus Kohlenstoff oder einem anderen leitfähigen Material ausgeführt sein und sind ebenfalls auf der Folie 30 angebracht. Die Kontaktierung mit einer Elektronik der Waschmaschine erfolgt über Federelemente (nicht dargestellt) aus leitfähigem Material, welche sich in Kunststoffhalterungen (so genannten "Retainers") befinden.

In Fig. 5 ist eine weitere mögliche Ausführung dargestellt, welche nicht Teil der Erfindung ist.

Das Lichtleiterteil 34 erstreckt sich im Prinzip parallel zu der Bedienblende 35, und zwar zwischen den jeweiligen Rändern der Aussparung 36. Das Lichtleiterteil 34 ist einstückig ausgebildet und weist eine Bedienseite 38 auf, an welcher eine dünne Schriftfolie 39 (Lichtmaske) angebracht ist. Die Schriftfolie 39 kann eine Dicke von einigen Mikrometern aufweisen, wie die Schriftfolie 25 gemäß Fig. 4. Auf der Schriftfolie 39 sind die in Fig. 5 nicht dargestellten Funktionszeichen angebracht bzw. ausgebildet.

An einer Rückseite 40 des Lichtleiterteils 34 ist eine Leiterplatte bzw. Platine 41 angebracht, welche zwischen zwei Rastelementen 42, 43 des Lichtleiterteils 34 befestigt ist. An der Leiterplatte 41 sind eine Vielzahl von Sensorelektroden 44 angebracht, welche an der Rückseite 40 des Lichtleiterteils 34 anliegen. Die Sensorelektroden 44 befinden sich also unmittelbar zwischen der Leiterplatte 41 und dem Lichtleiterteil 34. Zu jeder Sensorelektrode 44 ist in der Leiterplatte 41 jeweils eine Durchgangsöffnung 45 ausgebildet, die von einer Rückseite 46 jeweils mit einer Leuchtdiode 47 verdeckt ist. Die Leuchtdioden 47 sind Leuchtelemente, welche zur Beleuchtung der Funktionszeichen auf der Schriftfolie 39 dienen. Die Leuchtdioden 47 befinden sich also an der Rückseite 46 der Leiterplatte 41, und das von den Leuchtdioden 47 abgegebene Licht wird durch die jeweilige Durchgangsöffnung 45 hindurch sowie durch in den Sensorelektroden 44 ausgebildete Durchgangsöffnungen (nicht dargestellt) hindurch und dann über das Lichtleiterteil 34 hin zu der Schriftfolie 39 geführt.

Um eine separate Beleuchtung unterschiedlicher Funktionszeichen unabhängig voneinander zu gewährleisten, besteht das einstückig ausgebildete Lichtleiterteil 34 aus abwechselnd angeordneten lichtdurchlässigen Abschnitten 48 und dazwischen liegenden lichtundurchlässigen Abschnitten 49. Sowohl die lichtdurchlässigen Abschnitte 48 als auch die lichtundurchlässigen Abschnitte 49 sind im Querschnitt trapezförmig ausgebildet, nämlich derart, dass sich die lichtdurchlässigen Abschnitte 48 in Richtung zu der jeweiligen Durchgangsöffnung 45 verjüngen. Die lichtdurchlässigen Abschnitte 48 beginnen somit an der jeweiligen Durchgangsöffnung 45 und weisen eine in Richtung zur Schriftfolie 39 hin größer werdende Breite auf. Somit sind die lichtundurchlässigen Abschnitte 49 in Richtung zur Schriftfolie 39 verjüngt ausgebildet. Die minimale Breite der lichtdurchlässigen Abschnitte 48 ist etwa gleich dem Durchmesser der Durchgangsöffnungen 45. Die maximale Breite der lichtdurchlässigen Abschnitte 48 hängt von der Größe des jeweiligen, zu beleuchtenden Funktionszeichens ab. Durch eine derartige Ausgestaltung des Lichtleiterteils 34 können relativ große Anzeigeflächen beleuchtet werden, und zwar bei gleichzeitig großen Sensorelektroden 44 und somit bei gleichzeitig hoher Empfindlichkeit der Bedien- und Anzeigeeinrichtung.

Die Sensorelektroden 44 sind mit einer in Fig. 5 nicht dargestellten Auswerteeinheit bzw. Steuereinrichtung elektrisch gekoppelt - dies gilt entsprechend für die Sensorelektroden 31 gemäß Fig. 4. Jede Sensorelektrode ist für sich genommen ein Teil eines Berührungskondensators, dessen zweite Kondensatorplatte durch den Finger der Bedienperson gebildet wird. Im Ausführungsbeispiel gemäß Fig. 5 ist die Betätigungsfläche 16'" durch die Oberfläche der Folie 39 gebildet. Die Bedienperson kann die Betätigungsfläche 16", 16'" berühren, um den gewünschten Parameterwert einzustellen. Dann ändert sich die Kapazität des Berührungskondensators, welcher einerseits aus dem Finger der Bedienperson und andererseits aus der gegenüber liegenden Sensorelektrode 44, 31 besteht, wie auch aus dem dazwischen liegenden Dielektrikum. Diese Kapazitätsänderung wird dann durch die Auswerteeinheit erfasst und ausgewertet. Ein derartiges Verfahren ist beispielsweise bereits in der Druckschrift DE 10 2005 041 113 A1 beschrieben.

### Bezugszeichenliste

- 1: Bedien- und Anzeigeeinrichtung
- 2: LED-Display
- 3: erste Spalte von Funktionszeichen
- 4: zweite Spalte von Funktionszeichen
- 5: dritte Spalte von Funktionszeichen
- 6, 7, 8, 9: kapazitive Bedienelemente
- 10: Anzeigebereich
- 11, 11', 11", 11'": Bedien- und Anzeigeeinrichtung
- 12, 12': LED-Display
- 13, 13', 13": erste Spalte von Funktionszeichen
- 14, 14', 14": zweite Spalte von Funktionszeichen
- 15, 15', 15": dritte Spalte von Funktionszeichen
- 16, 16', 16", 16'": berührungssensitive Betätigungsfläche
- 17, 17': Überlappungsbereiche
- 18, 18', 18": Symbole
- 19, 19', 19": Anzeigebereich
- 20, 21: Symbole
- 22: Schalter
- 23: Symbol
- 24: Lichtleiterteil
- 25: Folie
- 26: Anzeigefenster
- 27: Rückseite
- 28: nicht bedruckte Flächen
- 29: Oberfläche
- 30: Folie
- 31: Sensorelektroden
- 32: Leiterbahnen
- 33: Kontaktflächen
- 34: Lichtleiterteil
- 35: Bedienblende
- 36: Aussparung
- 37: Dicke
- 38: Bedienseite
- 39: Schriftfolie
- 40: Rückseite
- 41: Leiterplatte
- 42, 43: Rastelemente
- 44: Sensorelektroden
- 45: Durchgangsöffnung
- 46: Rückseite
- 47: Leuchtdiode
- 48: lichtdurchlässige Abschnitte
- 49: lichtundurchlässige Abschnitte

## Patentansprüche

1. Haushaltsgerät mit einer Bedien- und Anzeigeeinrichtung (11), mit:
- einer Bedienblende;
- Bedienmitteln zum Einstellen zumindest eines Parameters eines Betriebsprozesses des Haushaltsgeräts, wobei die Bedienmittel als berührungssensitive, kapazitive Bedienmittel ausgebildet sind und eine berührungssensitive Betätigungsfläche (16) aufweisen,
- einer Vielzahl von kapazitiven Sensorelektroden (31, 44), die in einem Abstand zu der berührungssensitiven Betätigungsfläche (16) angeordnet sind,
- einem Lichtleiterteil (24, 34) zum Leiten von Licht,
- einer Vielzahl von Funktionszeichen (13, 14, 15), die jeweils einen auswählbaren Wert des Parameters symbolisieren, und
- einer Leuchteinrichtung (47) zum Hinterleuchten der Funktionszeichen (13, 14, 15), mittels welcher das dem jeweils ausgewählten Wert des Parameters zugeordnete Funktionszeichen (13, 14, 15) gegenüber anderen Funktionszeichen (13, 14, 15) optisch hervorhebbar ist,
- wobei an dem Lichtleiterteil (24, 34) ein plattenartiges, zumindest bereichsweise aus einem lichtdurchlässigen Material, insbesondere aus transparentem Kunststoff, ausgebildetes Anzeigefenster (26) angebracht ist, dessen Oberfläche (29) die berührungssensitive Betätigungsfläche (16) bildet, und
wobei die berührungssensitive Betätigungsfläche (16) in Überlappung mit den Funktionszeichen (13, 14, 15) angeordnet ist, so dass durch Berühren der Betätigungsfläche (16) in einem Überlappungsbereich (17) mit einem der Funktionszeichen (13, 14, 15) der diesem Funktionszeichen (13, 14, 15) zugeordnete Wert des Parameters auswählbar ist, und wobei an dem Lichtleiterteil (24, 34) oder dem Anzeigefenster (26) eine transparente Schicht mit daran angebrachten Sensorelektroden (31, 44) angeordnet ist,
**dadurch gekennzeichnet,**
- **dass** die transparente Schicht eine Folie (30) ist, die zwischen dem Lichtleiterteil (24, 34) und dem Anzeigefenster (26) angeordnet ist, und
- **dass** die kapazitiven Sensorelektroden (31, 44) in Überlappung mit der berührungssensitiven Betätigungsfläche (16) angeordnet sind und dass zumindest einem Teil der Funktionszeichen (13, 14, 15) jeweils eine separate kapazitive Sensorelektrode (31, 44) zugeordnet ist, welche in Überlappung mit dem ihr zugeordneten Funktionszeichen (13, 14, 15) angeordnet ist, so dass durch Berühren der Betätigungsfläche (16) in einem Überlappungsbereich (17) mit einer der Sensorelektroden (31, 44) eine Kapazität eines diese Sensorelektrode (31, 44) aufweisenden Berührungskondensators veränderbar ist, und
- **dass** die Folie (30) Leiterbahnen umfasst. und
- **dass** das Anzeigefenster (26) ein transparentes Kunststoffdisplay ist und auf der Rückseite (27) des Anzeigefensters (26) die Folie (30) durch Kleben oder mit Spritz- bzw. Heißprägeverfahren mit dem Anzeigefenster (26) verbunden ist, und
- **dass** die Bedienblende eine Durchgangsöffnung aufweist, in welcher das Anzeigefenster (26) eingeschweisst ist.

2. Haushaltsgerät nach Anspruch 1 2, **dadurch gekennzeichnet, dass** die Sensorelektroden (31, 44) und die Leiterbahnen durch Heißprägen auf die Folie (30) aufgebracht sind.

3. Haushaltsgerät nach einem der Ansprüche 1 bis 32, **dadurch gekennzeichnet, dass** die Funktionszeichen (13, 14, 15) an dem Lichtleiterteil (24, 34) angeordnet sind.

4. Haushaltsgerät nach einer der Ansprüche 1 bis 43, **dadurch gekennzeichnet, dass** zumindest zwei benachbarte Funktionszeichen (13, 14, 15) in Überlappung mit einer gemeinsamen Sensorelektrode (31, 44) angeordnet sind, wobei durch Gleiten über die Betätigungsfläche (16) in einem Überlappungsbereich (17) mit den zumindest zwei Funktionszeichen (13, 14, 15) und der gemeinsamen Sensorelektrode (31, 44) der jeweils zugeordnete Wert des Parameters auswählbar ist.

5. Haushaltsgerät nach einem der vorhergehenden Ansprüche, **dadurch gekennzeichnet, dass** die Bedienmittel zum Einstellen einer Betriebstemperatur als Parameter ausgebildet sind und zumindest ein Teil der Funktionszeichen (13, 14, 15) jeweils einen auswählbaren Wert der Betriebstemperatur symbolisieren.

6. Haushaltsgerät nach einem der vorhergehenden Ansprüche, **dadurch gekennzeichnet, dass** die Bedienmittel zum Einstellen einer Bewegungsgeschwindigkeit einer Komponente des Haushaltsgeräts als Parameter ausgebildet sind und zumindest ein Teil der Funktionszeichen (13, 14, 15) jeweils einen auswählbaren Wert der Bewegungsgeschwindigkeit symbolisieren.

7. Haushaltsgerät nach einem der vorhergehenden Ansprüche, **dadurch gekennzeichnet, dass** die Bedienmittel zum Festlegen eines Betriebsprogramms für den Betriebsprozess als Parameter ausgebildet sind und zumindest ein Teil der Funktionszeichen (13, 14, 15) jeweils ein verschiedenes Betriebsprogramm symbolisieren.

8. Haushaltsgerät nach einem der vorhergehenden Ansprüche, **dadurch gekennzeichnet, dass** an dem Lichtleiterteil (24, 34) eine Folie (25, 39) mit den Funktionszeichen (13, 14, 15) angebracht ist.

9. Haushaltsgerät nach Anspruch 8, **dadurch gekennzeichnet, dass** an einer von der Betätigungsfläche (16) abgewandten Rückseite (27) des Anzeigefensters (26) mit Ausnahme der Überlappungsbereiche (17) mit den Funktionszeichen (13, 14, 15) ein lichtundurchlässiger Sperrdruck, insbesondere ein Siebdruck, aufgebracht ist.

10. Haushaltsgerät nach Anspruch 8 oder 9, **dadurch gekennzeichnet, dass** an einer von der Betätigungsfläche (16) abgewandten Rückseite (27) des Anzeigefensters (26) im Überlappungsbereich (17) mit den Funktionszeichen (13, 14, 15) ein Sperrdruck, insbesondere ein Siebdruck, aufgebracht ist, der den Lichtdurchtritt vermindert, wobei die Funktionszeichen (13, 14, 15) nur bei einer aktivierten Hinterleuchtung an Oberfläche (29) des Anzeigefensters (26) erkennbar sind.

11. Haushaltsgerät nach einem der Ansprüche 8 bis 10, **dadurch gekennzeichnet, dass** das Anzeigefenster (26) aus einem farblich getönten Material ausgebildet ist.

## Claims

1. Household appliance having an operating and display device (11), with:
- a control panel;
- operating means for setting at least one parameter of an operational process of the household appliance, wherein the operating means is embodied as a touch-sensitive, capacitive operating means and has a touch-sensitive actuation surface (16),
- a plurality of capacitive sensor electrodes (31, 44), which are arranged at a distance from the touch-sensitive actuation surface (16),
- a light conductor part (24, 34) for conducting light,
- a plurality of function symbols (13, 14, 15), which each symbolise a selectable value of the parameter, and
- a lighting device (47) for backlighting the function symbols (13, 14, 15), by means of which the function symbol (13, 14, 15) assigned to the respective selected value of the parameter can be optically distinguished from the other function symbols (13, 14, 15),
- wherein a plate-like display window (26), embodied at least in some areas from a light-permeable material, especially from transparent plastic, the surface (29) of which forms the touch-sensitive actuation surface (16), is attached to the light conductor part (24, 34), and wherein the touch-sensitive actuation surface (16) is arranged so as to overlap with the function symbols (13, 14, 15) so that, by touching the actuation surface (16) in an overlapping area (17) with one of the function symbols (13, 14, 15), the value of the parameter assigned to this function symbol (13, 14, 15) is able to be selected, and wherein a transparent layer with sensor electrodes (31, 44) attached thereto is arranged on the light conductor part (24, 34) or the display window (26),
**characterised in that**
- the transparent layer is a film (30), which is arranged between the light conductor part (24, 34) and the display window (26), and
- the capacitive sensor electrodes (31, 44) are arranged so as to overlap with the touch-sensitive actuation surface (16) and a separate capacitive sensor electrode (31, 44), which is arranged so as to overlap with the function symbols (13, 14, 15) assigned to it, is assigned to at least a part of the function symbols (13, 14, 15) in each case, so that by touching the actuation surface (16) in an overlapping area (17) with one of the sensor electrodes (31, 44) a capacitance of a touch capacitor having one of these sensor electrodes (31, 44) is able to be changed, and
- the film (30) comprises conductor paths, and
- the display window (26) is a transparent plastic display and on the rear side (27) of the display window (26) the film (30) is connected to the display window (26) by means of adhesion or using injection moulding or hot stamping methods, and
- the control panel has a through opening in which the display window (26) is shrink-wrapped.

2. Household appliance according to claim 1, **characterised in that** the sensor electrodes (31, 44) and the conductor paths are applied to the film (30) by means of hot stamping.

3. Household appliance according to one of claims 1 to 2, **characterised in that** the function symbols (13, 14, 15) are arranged on the light conductor part (24, 34).

4. Household appliance according to one of claims 1 to 3, **characterised in that** at least two adjacent function symbols (13, 14, 15) are arranged so as to overlap with a common sensor electrode (31, 44), wherein by sliding over the actuation surface (16) in an overlapping area (17) with the at least two function symbols (13, 14, 15) and the common sensor electrode (31, 44), the respective assigned value of the parameter is able to be selected.

5. Household appliance according to one of the preceding claims, **characterised in that** the operating means is embodied for setting an operating temperature as a parameter and at least a part of the function symbols (13, 14, 15) symbolises a selectable value of the operating temperature in each case.

6. Household appliance according to one of the preceding claims, **characterised in that** the operating means is embodied for setting a speed of movement of a component of the household appliance as the parameter and at least a part of the function symbols (13, 14, 15) symbolises a selectable value of the speed of movement in each case.

7. Household appliance according to one of the preceding claims, **characterised in that** the operating means is embodied for defining an operating program for the operational process as the parameter and at least a part of the function symbols (13, 14, 15) symbolises a different operating program in each case.

8. Household appliance according to one of the preceding claims, **characterised in that** a film (25, 39) with the function symbols (13, 14, 15) is attached to the light conductor part (24, 34).

9. Household appliance according to claim 8, **characterised in that**, except for in the overlapping areas (17) with the function symbols (13, 14, 15), a light-impermeable print mask, especially a screen print, is applied to a rear side (27) of the display window (26) facing away from the actuation surface (16).

10. Household appliance according to claim 8 or 9, **characterised in that** a printed mask, especially a screen print, is applied to a rear side (27) of the display window (26) facing away from the actuation surface (16) in the overlapping area (17) with the function symbols (13, 14, 15), which reduces the passage of light, wherein the function symbols (13, 14, 15) are only visible on the surface (29) of the display window (26) when the backlighting is activated.

11. Household appliance according to one of claims 8 to 10, **characterised in that** the display window (26) is formed from a colour-tinted material.

## Revendications

1. Appareil ménager muni d'un dispositif de commande et d'affichage (11), avec :
- une plaque de commande ;
- un moyen de commande destiné au réglage d'au moins un paramètre d'un cycle de fonctionnement de l'appareil ménager, dans lequel le moyen de commande est réalisé sous forme de moyen de commande capacitif sensible au toucher et présente une surface d'actionnement (16) sensible au toucher,
- une pluralité d'électrodes de capteur capacitives (31, 44), qui sont agencées à une distance par rapport à la surface d'actionnement (16) sensible au toucher,
- une partie conductrice de lumière (24, 34) destinée à conduire la lumière,
- une pluralité de symboles de fonction (13, 14, 15), qui symbolisent respectivement une valeur sélectionnable du paramètre, et
- un dispositif d'éclairage (47) destiné au rétro-éclairage des symboles de fonction (13, 14, 15), au moyen duquel le symbole de fonction (13, 14, 15) associé à la valeur respectivement sélectionnée du paramètre peut être mis en évidence de manière optique par rapport à d'autres symboles de fonction (13, 14, 15),
dans lequel une fenêtre d'affichage (26) de type plaque, réalisée au moins par secteurs en un matériau translucide, en particulier en plastique transparent, et dont la surface (29) forme la surface d'actionnement (16) sensible au toucher, est appliquée sur la partie conductrice de lumière (24, 34), et
dans lequel la surface d'actionnement sensible au toucher (16) est agencée recouvrant les symboles de fonction (13, 14, 15), de telle manière que, dans un secteur de recouvrement (17) d'un des symboles de fonction (13, 14, 15), la valeur du paramètre associée audit symbole de fonction (13, 14, 15) peut être sélectionnée en touchant la surface d'actionnement (16), et dans lequel une couche transparente avec des électrodes de capteur (31, 44) appliquées dessus est agencée sur la partie conductrice de lumière (24, 34) ou la fenêtre d'affichage (26),
**caractérisé en ce que**,
- la couche transparente est une feuille (30), qui est agencée entre la partie conductrice de lumière (24, 34) et la fenêtre d'affichage (26), et
- les électrodes de capteur capacitives (31, 44) sont agencées recouvrant la surface d'actionnement sensible au toucher (16) et une électrode de capteur capacitive (31, 44) séparée est associée respectivement à au moins une partie des symboles de fonction (13, 14, 15), ladite électrode étant agencée recouvrant le symbole de fonction (13, 14, 15) qui lui est associé, de telle manière qu'une capacité d'un condensateur sensible au toucher présentant ladite électrode de capteur (31, 44) peut être modifiée en touchant la surface d'actionnement (16) dans un secteur de recouvrement (17) d'une des électrodes de capteur (31, 44), et
la feuille (30) comprend des circuits conducteurs, et
la fenêtre d'affichage (26) est un écran en plastique transparent et, sur la face arrière (27) de la fenêtre d'affichage (26), la feuille (30) est reliée à la fenêtre d'affichage (26) par collage ou grâce à un procédé de projection ou d'estampage à chaud, et
la plaque de commande présente une ouverture traversante dans laquelle est soudée la fenêtre d'affichage (26).

2. Appareil ménager selon la revendication 1, **caractérisé en ce que** les électrodes de capteur (31, 44) et les circuits conducteurs sont appliqués sur la feuille (30) par estampage à chaud.

3. Appareil ménager selon l'une quelconque des revendications 1 à 2, **caractérisé en ce que** les symboles de fonction (13, 14, 15) sont agencés sur la partie conductrice de lumière (24, 34).

4. Appareil ménager selon l'une quelconque des revendications 1 à 3, **caractérisé en ce qu'**au moins deux symboles de fonction (13, 14, 15) voisins sont agencés recouvrant une électrode de capteur (31, 44) commune, dans lequel la valeur, respectivement associée, du paramètre peut être sélectionnée par effleurement sur la surface d'actionnement (16) dans un secteur de recouvrement (17) des au moins deux symboles de fonction (13, 14, 15) et de l'électrode de capteur (31, 44) commune.

5. Appareil ménager selon l'une quelconque des revendications précédentes, **caractérisé en ce que** le moyen de commande destiné au réglage d'une température de fonctionnement est réalisé sous forme de paramètre et au moins une partie des symboles de fonction (13, 14, 15) symbolisent respectivement une valeur sélectionnable de la température de fonctionnement.

6. Appareil ménager selon l'une quelconque des revendications précédentes, **caractérisé en ce que** le moyen de commande destiné au réglage d'une vitesse de mouvement d'un composant de l'appareil ménager est réalisé sous forme de paramètre et au moins une partie des symboles de fonction (13, 14, 15) symbolisent respectivement une valeur sélectionnable de ladite vitesse de mouvement.

7. Appareil ménager selon l'une quelconque des revendications précédentes, **caractérisé en ce que** le moyen de commande destiné à la détermination d'un programme de fonctionnement pour le cycle de fonctionnement est réalisé sous forme de paramètre et au moins une partie des symboles de fonction (13, 14, 15) symbolisent respectivement un programme de fonctionnement différent.

8. Appareil ménager selon l'une quelconque des revendications précédentes, **caractérisé en ce qu'**une feuille (25, 39) présentant les symboles de fonction (13, 14, 15) est appliquée sur la partie conductrice de lumière (24, 34).

9. Appareil ménager selon la revendication 8, **caractérisé en ce qu'**une impression de blocage opaque, en particulier une impression sérigraphique, est appliquée sur une face arrière (27), détournée de la surface d'actionnement (16), de la fenêtre d'affichage (26) à l'exception des secteurs de recouvrement (17) des symboles de fonction (13, 14, 15).

10. Appareil ménager selon la revendication 8 ou 9, **caractérisé en ce qu'**une impression de blocage opaque, en particulier une impression sérigraphique, est appliquée sur une face arrière (27), détournée de la surface d'actionnement (16), de la fenêtre d'affichage (26) dans un secteur de recouvrement (17) des symboles de fonction (13, 14, 15), ladite impression diminuant la pénétration de lumière, dans lequel les symboles de fonction (13, 14, 15) ne peuvent être identifiés que lorsqu'un rétro-éclairage est activé au niveau de la surface (29) de la fenêtre d'affichage (26).

11. Appareil ménager selon l'une quelconque des revendications 8 à 10, **caractérisé en ce que** la fenêtre d'affichage (26) est réalisée en un matériau teinté en couleur.
